(19) Europäisches Patentamt
European Patent Office
Office européen des brevets

(11) Publication number: **0 293 129 B1**

(12) **EUROPEAN PATENT SPECIFICATION**

(45) Date of publication of patent specification: **17.06.92**

(51) Int. Cl.[5]: **B05D 1/02**, C02F 1/56

(21) Application number: **88304487.7**

(22) Date of filing: **18.05.88**

# (54) Process for detackification of paint spray operation wastes using melamine formaldehyde.

(30) Priority: **26.05.87 US 53936**

(43) Date of publication of application:
**30.11.88 Bulletin 88/48**

(45) Publication of the grant of the patent:
**17.06.92 Bulletin 92/25**

(84) Designated Contracting States:
**AT BE CH DE ES FR GB GR IT LI LU NL SE**

(56) References cited:
**US-A- 4 629 572**
**US-A- 4 656 059**

(73) Proprietor: **CALGON CORPORATION**
**Route 60-Campbell's Run Road**
**Robinson Township Pennsylvania 15205(US)**

(72) Inventor: **Faust, Charles A.**
**4823 Sutton Place**
**Wexford Pennsylvania 15090(US)**
Inventor: **Miknevich, Joseph P.**
**624 Hemlock Drive**
**Coraopolis Pennsylvania 15108(US)**

(74) Representative: **Hesketh, Alan, Dr.**
**European Patent Department Merck & Co., Inc. Terlings Park Eastwick Road**
**Harlow Essex, CM20 2OR(GB)**

**EP 0 293 129 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a method of killing and flocculating over-sprayed, water-insoluble paint according to the preamble of claim 1.

Automobile parts, bicycles, toys, appliances and other industrial and consumer articles are conventionally spray painted in areas called spray booths wherein water curtains are employed to wash the air and to remove over-sprayed paint, lacquer or enamel solids. The wash water is then treated to remove paint solids, and the treated water is recirculated.

A water curtain is typically created by pumping water into a trough above the overspray area. The overflow from the trough is then controlled so that a uniform sheet of water falls along the length of the trough and down the booth's wall. Spray nozzles are also commonly used. Droplets of oversprayed paint, emitted by a spray gun, contact and are captured by the water curtain.

A major problem associated with spraying operations concerns the tacky or adhesive nature of the over-sprayed coating materials. Solids tend to agglomerate and accumulate on the walls, ceiling and floor of spray areas and to clog water spray equipment, recirculating pumps and the like. Thus, the overspray, or paint mist, captured in the water system of a spray booth must be detackified, or "killed", before it adheres to the walls, piping, etc. of the spray booth. Paint that sticks to spray booth surfaces usually cannot be easily removed from the equipment and tends to build up overtime, which hampers spray booth efficacy.

Other problems which severely interfere with spray booth operations occur in areas of high agitation where foaming occurs and in areas where foam accumulates. Foaming is caused by chemical additives, paint solids, solvents or combinations thereof. Foaming generally mandates that copious amounts of defoamers be used, which results in higher operating costs.

The term "paint killing", as used herein, refers to the act of detackifying oversprayed paint in paint spray booths.

"Paint", as used herein, is a generic term which encompasses all common varieties of water insoluble coatings commonly applied in spraying operations, including but not limited to oil base paints, enamels and lacquers. These products, if untreated, readily adhere to the walls of spray booths and any other surface that they contact, such as the surfaces of water distribution piping, spray nozzles etc.

One solution which has been found to have practical application to the overspray problem involves the use of chemicals which, when added spray booth water, detackify paint solids. A wide variety of chemicals have been proposed for this purpose, including compositions containing polymers and multi-valent metal salts which form insoluble hydroxides at pH's greater than about 7. The use of combinations of this type are described in the folowing U.S. Patents; 3,861,887 to Forney; 3,990,986 to Gabel et al; 4,002,490 to Michalski et al; 4,130,674 to Roberts et al; and 4,440,647 to Puchalski. Bentonite clays, aluminum salts and zinc salts have also been used with cationic coagulants to kill paints. While these compositions are somewhat effective in detackifying and removing paint over-spray, a need exists for more efficient products which produce a low volume sludge that is suitable for landfill disposal. These products should also hwo efficacy when used on advanced paint formulations which may be difficult to detackify.

U.S. Patent no. 4,656,059 discloses a method and composition for the treatment of circulating water which collects surplus paint in a wet spray booth. The method is characterised by the use of a melamine-aldehyde acid colloid solution.

U.S. Patent no. 4,629,572 discloses paint detackification methods employing a water-dispersable polymeric condensation reaction product of a urea or an amino triazine and an aldehyde, and a water-swellable clay such as smectite clay or a montmorillonite clay.

The instant invention relates to the use of melamine aldehyde-type polymers to kill over-sprayed paint; preferably, the polymer is used in combination with at least one polymeric coagulant. The inventor has discovered that such compositions are highly efficient killing agents for a wide variety of paints, and that they produce a low-volume, flocculated, non-metallic sludge which may be readily disposed of in landfills or by incineration.

Additionally, by utilising a melamine aldehyde-type polymer and a polymeric coagulant, foaming in the system being treated is controlled. This greatly reduces operating costs.

Melamine aldehyde-type polymers, which have been used in water clarification and oil/water separation processess for a number of years, are commercially available from Calgon Corporation, Pittsburgh, PA, as CA-289 and WT-2511. However, their use as paint kill agents, alone or in combination with other flocculants, is not known in the art.

## DETAILED DESCRIPTION OF THE INVENTION

The instant invention relates to an improved method of killing and flocculating over-sprayed, water-insoluble paint which contacts and is captured by water in a paint spray booth operation, wherein an effective amount of a melamine aldehyde-type polymer is maintained in the paint spray booth water, over-sprayed, water-insoluble paint is contacted with the paint spray booth water, an effective amount of a polymeric coagulant is added to the paint spray booth water, and resulting sludge is removed from the paint spray booth water, characterised in that: (a) the alkalinity of the paint spray booth water is adjusted to between about 50 and 1100 ppm, on a calcium carbonate basis, prior to contacting the paint with the water, and (b) after contacting the paint with the water, the effective amount of the polymeric coagulant is added to the water.

The alkalinity of the water in the paint spray booth system being treated should be adjusted so as to provide a minimum alkalinity of about 50 ppm (as calcium carbonate) to a maximum alkalinity of about 1100 ppm. Preferably, the alkalinity should be maintained between about 200 ppm and about 600 ppm (as calcium carbonate), which typically results in a pH in the range of about 7.5 to about 9.5. Most preferably, the alkalinity should range between about 300 and 500 ppm (as calcium carbonate). Any basic agent may be used to adjust the alkalinity of the water, including but not limited to amines, soda ash, sodium bicarbonate, sodium hydroxide, potassium hydroxide, silicates such as sodium silicate and sodium metasilicate, sodium aluminate and ammonium hydroxide. The alkalinity adjustment should be made so that the water forming the curtain which contacts the over-sprayed paint being treated is in the desired alkalinity range. Any method of adding of the alkalinity control agent may be used, including batch or continuous addition.

The water pH should be maintained between about 7.5 and about 9.5. pH's below about 7.5 are undesirable because detackification efficiency is reduced, corrosion rates increase and biological activity increases. pH's above about 9.5 are generally not deleterrous to the system but are not necessary and represent an additional cost. Also such high pH's may increase turbidity and foaming tendencies, and may pose safety hazards to operating personnel.

In addition to the alkalinity requirement, an effective amount of a melamine aldehyde-type polymer must be used. Any melamine aldehyde-type polymer can be used. As used herein, a melamine aldehyde type-polymer is a polymer prepared using a) melamine or a substituted melamine; and b) an aldehyde having a formula

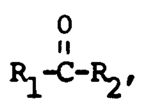

wherein $R_1$ and $R_2$, which may be the same or different, are selected from the group consisting of H and straight or branched $C_{1-4}$ alkyl. The preferred aldehydes are methanal (formaldehyde), ethanal and propanal; the most preferred aldehyde is formaldehyde.

The mol ratio of component a) to component b) should range from about 1:1 to about 1:10, with the preferred ratio being about 1:3-1:6. The most preferred mol ratio is about 1 mol of melamine or derivative thereof to about 3 mols of an aldehyde. Thus, the most preferred polymer is prepared from melamine and formaldehyde, and the mol ratio of melamine to formaldehyde is about 1:3.

The instant melamine aldehyde-type polymers are insoluble in water. They are therefore best utilized in acidic solutions wherein the melamine formaldehye polymer is in a fine colloidal state of suspension. Calgon's product CA-289, which has a pH of about 1:6 to about 2.1, is an example of the preferred form. This product contains 8% active melamine formaldehyde in an acidic aqueous solution. Any acid can be used to prepare the melamine aldehyde acid suspensions, though hydrochloric acid is preferred. The % active melamine aldehyde-type polymer is acidic suspension or solution should range from about 0.1% to about 20%, preferably 1% to about 15%, and most preferably about 4% to about 12%. The pH should be sufficiently low to keep the melamine aldehyde-type polymer in a fine colloidal suspension.

The molecular weight of the melamine aldehyde-type polymer is not critical. However, the preferred molecular weight ranges from about 500 to about 50,000, and the most preferred molecular weight ranges from about 500 to about 5,000..

Suitable melamine aldehyde-type polymers are commercially available from Calgon Corporation, under the trade names CA-289 and WT-2511. These products have molecular weights of about 2,200.

An effective amount of the melamine aldehyde-type polymer should be maintained in the water being

treated. The melamine aldehyde-type polymer reacts with the alkalinity to form fine colloidal particles. These particles readily absorb onto the surface of individual paint droplets to form a non-tacky coating, thereby killing the paint. As used herein, the term "effective amount" refers to that amount of melamine aldehyde-type polymer which produces sufficient colloidal particles with alkalinity to absorb onto all paint particles present in the system being treated. Since the rate of paint capture by a water curtain varies depending on a number of variables, including plant or process line shutdowns, the size of the items being painted, techniques of the person spraying, the water flow rate and the type of paint being used, the amount of paint that is captured may vary considerably for a given system. Because of this variability an "effective amount" of melamine aldehyde-type polymer may also be defined as the amount of melamine aldehyde-type polymer required to prevent adhesion of captured paint to surfaces of the paint spray booth apparatus being treated.

The melamine aldehyde-type polymer can be applied intermittently or continuously to the water system being treated at a rate of from between about 10 to about 10,000 parts per million, based on the total weight of the water in the paint spray booth system being treated. The melamine aldehyde-type polymer may be added at any convenient location, but is preferably added to a line supplying the trough, spray nozzles, or other device used to form the water curtain. The alkalinity adjustment and melamine aldehyde-type polymer addition steps may be carried out simultaneously or in sequence, whichever is more convenient. The key factor is that the over-sprayed paint contact water within the desired alkalinity range which contains an effective amount of a melamine aldehyde-type polymer.

In a typical paint spray booth, the sump into which the water curtain falls is extremely turbulent. This turbulence assists the efficacy of the treatment by promoting intimate contact between the paint and the melamine aldehyde-type polymer. This produces a colloidal detackified paint floc which tends to float. It is into this turbulent region to which a polymeric coagulant is preferably added. Any polymeric coagulant can be used, including cationic, anionic, nonionic and amphoteric coagulants. The molecular weight of the polymeric coagulant is not critical; thus, coagulants having weight average molecular weights ranging from about $10^3$ to values as high as $20 \times 10^6$ may be used.

Typical cationic polyelectrolytes which may be used as coagulants in the instant invention include but are not limited to polyamines, polyphosphonium compounds, polysulfonium compounds, quaternary ammonium compounds, polymers of methacryloyloxyethyl trimethyl ammonium methyl sulfate (METAMS), polymers of methacrylamido propyl trimethyl ammonium chloride (MAPTAC), polymers of acryloyloxyethyl trimethyl ammonium chloride (AETAC), polymers of methacryloyloxyethyl trimethyl ammonium chloride METAC) and polymers prepared from combinations of METAMS, MAPTAC, AETAC and/or METAC with acrylamide and/or methyacrylamide. Representative of quaternary ammonium compounds are diethyldiallyl ammonium and dimethyldiallyl ammonium polymers and salts thereof. The preferred cationic coagulants are quaternary ammonium polymers selected from the group consisting of poly dimethyldiallyl ammonium chloride (polyDMDAAC), poly dimethyldiallyl ammonium bromide (polyDMDAAB), poly diethyldiallyl ammonium chloride polyDEDAAC), poly diethyldiallyl ammonium bromide (polyDEDAAB), and polymers of dimethyldiallyl ammonium chloride, dimethyldiallyl ammonium bromide, diethyldiallyl ammonium chloride and diethyldiallyl ammonium bromide and acrylamide or methacrylamide. The preferred molecular weight range of the quaternary ammonium polymers ranges from about 2,000 to about 5,000,000.

The most preferred cation coagulant is a polymer comprising dimethyl diallyl ammonium chloride and acrylamide, or a homologue thereof, having a weight average molecular weight ranging from about 2,000 to about 5,000,000.

Any high molecular weight nonionic coagulant can be used. As examples of nonionic coagulants, one may list long chain polyacrylamides and long chain polymethacrylamides. The most preferred nonionic coagulants are polyacrylamides having a weight average molecular weight ranging from about $2 \times 10^6$ to about $20 \times 10^6$.

Any high molecular weight anionic polyelectrolyte may be used as a coagulant in the instant method. The preferred anionic polyelectrolytes are polymers of acrylic acid and salts thereof, polymers of methacrylic acid and salts thereof, polymers of 2-acrylamido-2-methylpropylsulfonic acid and salts thereof, polymers of 2-methacrylamido-2-methylpropylsulfonic acid and salts thereof, and copolymers of a) acrylic acid and/or methacrylic acid and b) 2-acrylamido-2-methylpropylsulfonic acid and/or 2-methacrylamido-2-methylpropylsulfonic acid. Hydrolyzed polyacrylamides may also be used. The preferred anionic polyelectrolytes are selected from the group consisting of polyacrylic acids and salts thereof, particularly sodium salts thereof, having a molecular weight ranging from about $2 \times 10^6$ to about $20 \times 10^6$, hydrolyzed polyacrylamides having virtually any degree of hydrolysis and molecular weights ranging from about $2 \times 10^6$ to about $20 \times 10^6$, and polymers comprising a) acrylic acid or methacrylic acid and b) 2-acrylamido-2-methylpropylsulfonic acid and/or 2-methacrylamido-2-methylpropylsulfonic acid, wherein the weight ratio of

a):b) ranges from about 1:99 to about 99:1, preferably 10:90 to 90:10 and most preferably 75:25, and wherein the molecular weight ranges from about 2 X $10^6$ to about 20 X $10^6$.

Any high molecular weight polyampholyte can be used as a coagulant. Representative examples of suitable polyampholytes include polymers comprising a) acrylic acid, methacrylic acid, 2-acrylamido-2-methylpropylsulfonic acid or 2-methacrylamido-2-methylpropylsulfonic acid, alone or in combination, and b) dimethyldiallyl ammonium chloride, dimethyldiallyl ammonium bromide, diethyldiallyl ammonium chloride or diethyldiallyl ammonium bromide, alone or in combination, wherein the weight ratio of component a) to component b) ranges from about 90:10 to about 10:90 and wherein the polyampholyte has a molecular weight ranging from about 2,000 to about 10,000,000. The polyampholytes may also contain nonionic moieties such as acrylamide or methacrylamide.

An effective amount of the polymeric coagulant should be added. As defined above, the effective amount depends upon the quantity of paint present in the system being treated. Ideally, the effective dosage will range from about 10 to about 50,000 parts per million of the polymeric coagulant, based on the total weight of the water in the system being treated.

The function of the polymeric coagulant is two-fold: it reacts with the melamine aldehyde-treated paint solids to form a large, easily dewatered floc, and it reduces or totally eliminates foam formation in the system by removing colloidal particulates present in the water.

After contacting the melamine aldehyde-treated paint with at least one polymeric coagulant, the sludge is removed from the water. This removal may be facilitated by any means known in the art, including but not limited to air flotation and filtration.

Other additives commonly used for paint killing may be used in the instant method. For example, bentonite clays, carbon black, talc, gums, starch, dextrin, lime, aluminum oxide, silica solids, and casein among other additives, may be used as additional process aids in conjunction with the primary steps of the instant method.

## EXAMPLES

The following examples demonstrate the instant invention in greater detail. They are not, however, intended to limit the scope of the invention in any way.

### EXAMPLES 1-5

In the following examples, 200 mls of distilled water were added to each of five (5) closeable one pint glass jars equipped with magnetic stirrers. While stirring all jars at high speed, a carbonate ion source was added to jars 3, 4, 5 so as to provide an alkalinity of 1000 ppm (calcium carbonate basis) in each of these jars. 0.2 ml of Calgon product CA-289 (melamine formaldehyde) was then added to each of jars 2, 4 and 5. As stirring continued, 0.5 ml of a commercially available white, high solids enamel paint was added to each jar using a syringe. After 30 seconds, 0.2 g of Calgon polymer 2230 (high molecular (5-6,000,000) weight copolymer of acrylamide and dimethyldiallyl ammonium chloride) was added to jars 2, 3 and 4. After 30 more seconds, the samples were evaluated. The results are given in Table 1.

### EXAMPLES 6-10

In these examples, the procedure of Examples 1-5 was repeated using a high solids clearcoat, available from DuPont. The results obtained were very similar to those for Examples 1-5.

### EXAMPLES 11-15

In these examples, the procedure of Examples 1-5 was repeated using a high solids metallic paint available from Dupont. The results obtained were very similar to those for Examples 1-5 and Examples 6-10.

### EXAMPLE 16

In this example, a Research Water Wall Test Tank similar to that described in Chrysler Corporation Laboratory Procedure 461-K-86, but fitted with an agitator and an external 10 gallon recirculating sump, was used to similate conditions in an actual spray booth. Prior to testing the alkalinity of the water was adjusted to give a reading of 600 parts as $CaCO_3$.

An Orion syringe pump was used to meter CA-289 (melamine formaldehyde) at a rate of 1 ml/min to the suction side of the pump going from the external sump to the water wall. A second syringe pump was set up to feed a 1.0% solution of high molecular weight cationic polymer 2230 to the suction side of the line leading from the test tank to the recirculating sump.

A DeVilbiss model EGA 502 paint spray gun was then positioned in front of the test tank with the tip approximately 14″ from the water wall and filled with 240 ml of a pre-thinned, high solids, metallic paint manufactured by DuPont. The air pressure was adjusted to 19-21 psig and the gun was adjusted to give a fine spray.

At the end of the spray period the recirculating system was turned off. Greater than 95% of the paint was floating on the surface of the external sump as a large fluffy floc. The "kill" was judged to be excellent and no tackiness or stickiness was evident. No foam was noted at any time during the trial.

EXAMPLE 17

In this example, the procedure used in Example 16 was followed except that the 50 ml of melamine aldehyde was "slug" fed to the test tank prior to the test and no high molecular weight polymer was added. Within 10 minutes of start up significant amounts of foam had been generated in the test tank and sump. After 50 minutes the system was stopped. Greater than 90% of the paint was floating on the surface of the sump as a creamy floc. The "kill" was judged to be very good with no tack and little or no smear. Two to three inches of foam were present on the surface of the sump and close to one inch was on the surface of the tank. The recirculating system was then turned on and 50 ml of a 1.0% solution of the high molecular weight cationic polymer slowly added to the suction side of the line leading from the tank to the external sump. At the end of 10 minutes the system was turned off. The paint floc was indistinguishable from that of Example 16 and no foam was now present.

TABLE 1

| EXAMPLE NUMBER | ALKALINITY | MELAMINE FORMALDEHYDE | CATIONIC POLYMER | TACKINESS | SMEAR | FLOC SIZE | WATER CLARITY | COMMENTS |
|---|---|---|---|---|---|---|---|---|
| 1 | - | - | - | Very tacky | Smeared Surfaces | Oily Droplets | Clear | Coated stirrer |
| 2 | - | 0.2 ml | 0.2 g | Tacky | Smeared Surfaces | Oily Droplets | Slight haze | Coated stirrer, no foam |
| 3 | 1000 ppm | - | 0.2 g | Tacky | Smeared Surfaces | Oily Droplets | Clear | Coated stirrer, no foam |
| 4 | 1000 ppm | 0.2 ml | 0.2 g | No tack | No Smear | Large floc, 100% float | Clear | Clean stirrer, clear bar, no foam |
| 5 | 1000 ppm | 0.2 ml | - | No tack | Slight Smear | Small Creamy floc 100% float | Slight haze | ½" foam, clean stirrer |

## Claims

**1.** A method of killing and flocculating over-sprayed, water-insoluble paint which contacts and is captured by water in a paint spray booth operation, wherein an effective amount of a melamine aldehyde-type

polymer is maintained in the paint spray booth water, over-sprayed, water-insoluble paint is contacted with the paint spray booth water, an effective amount of a polymeric coagulant is added to the paint spray booth water, and resulting sludge is removed from the paint spray booth water, characterised in that: (a) the alkalinity of the paint spray booth water is adjusted to between about 50 and 1100 ppm, on a calcium carbonate basis, prior to contacting the paint with the water, and (b) after contacting the paint with the water, the effective amount of the polymeric coagulant is added to the water.

**2.** The method of Claim 1 wherein said melamine aldehyde polymer is a melamine formaldehyde polymer.

**3.** The method of Claim 2 wherein said polymeric coagulant is cationic.

**4.** The method of Claim 2 wherein said polymeric coagulant is anionic.

**5.** The method of Claim 2, wherein said polymeric coagulant is polyampholyte.

**6.** The method of Claim 2, wherein said polymeric coagulant is nonionic.

**7.** The method of Claim 1, wherein said polymeric coagulant controls foaming in said operation.

**Revendications**

**1.** Méthode pour tuer et faire floculer une peinture pulvérisée en excès, insoluble dans l'eau, qui entre en contact avec l'eau et qui est captée par celle-ci dans une opération de cabine de peinture par pulvérisation, cette méthode étant telle qu'une quantité efficace d'un polymère de type mélamine-aldéhyde est maintenue dans l'eau de la cabine de peinture par pulvérisation, la peinture pulvérisée en excès, insoluble dans l'eau, est mise au contact de l'eau de la cabine de peinture par pulvérisation, on ajoute une quantité efficace d'un coagulant polymère à l'eau de la cabine de peinture par pulvérisation, et la boue résultante est enlevée de l'eau de la cabine de peinture par pulvérisation, la méthode étant caractérisée en ce que : (a) l'alcalinité de l'eau de la cabine de peinture par pulvérisation est ajustée à entre environ 50 et 1100 ppm, sur une base de carbonate de calcium, avant de mettre la peinture au contact de l'eau, et (b) après le contact de la peinture avec l' eau, on ajoute à l'eau la quantité efficace du coagulant polymère.

**2.** Méthode selon la revendication 1, où ledit polymère mélamine-aldéhyde est un polymère mélamine-formaldéhyde.

**3.** Méthode selon la revendication 2, où ledit coagulant polymère est cationique.

**4.** Méthode selon la revendication 2, où ledit coagulant polymère est anionique.

**5.** Méthode selon la revendication 2, où ledit coagulant polymère est polyampholyte.

**6.** Méthode selon la revendication 2, où ledit coagulant polymère est non ionique.

**7.** Méthode selon la revendication 1, où ledit coagulant polymère contrôle la formation de mousse dans ladite opération.

**Patentansprüche**

**1.** Verfahren zum Abtöten und Ausflocken versprühter, wasserunlöslicher Farbe, die beim Betrieb einer Farbsprühkabine mit Wasser in Berührung kommt und davon gefangen ist, bei dem eine wirksame Menge eines Polymers vom Melamin-Aldehydtyp im Wasser der Farbsprühkabine aufrechterhalten wird, versprühte, wasserunlösliche Farbe mit dem Wasser der Farbsprühkabine in Berührung gebracht wird, dem Wasser der Farbsprühkabine eine wirksame Menge eines polymeren Koagulationsmittels zugesetzt wird und die resultierende Aufschlämmung aus dem Wasser der Farbsprühkabine entfernt wird, dadurch gekennzeichnet, daß (a) die Alkalinität des Wassers der Farbsprühkabine auf einen Wert zwischen etwa 50 und 1100 ppm, auf Calciumcarbonatbasis, eingestellt wird, bevor die Farbe mit dem

Wasser in Berührung gebracht wird, und (b) nach dem Inberührungbringen der Farbe mit dem Wasser eine wirksame Menge des polymeren Koagulationsmittels dem Wasser zugesetzt wird.

**2.** Verfahren nach Anspruch 1, worin das Melamin-Aldehyd-Polymer ein Melamin-Formaldehyd-Polymer ist.

**3.** Verfahren nach Anspruch 2, worin das polymere Koagulationsmittel kationisch ist.

**4.** Verfahren nach Anspruch, worin das polymere Koagulationsmittel anionisch ist.

**5.** Verfahren nach Anspruch 2, worin das polymere Koagulationsmittel ein Polyampholyt ist.

**6.** Verfahren nach Anspruch 2, worin das polymere Koagulationsmittel nicht-ionisch ist.

**7.** Verfahren nach Anspruch 1, worin das polymere Koagulationsmittel die Schaumbildung beim Betrieb steuert.